# EUROPEAN PATENT APPLICATION

(11) **EP 2 405 149 A1**
(43) Date of publication of application: **11.01.2012**
(21) Application number: 10748809.0
(22) Date of filing: 04.03.2010
(51) Int. Cl.: F16B 19/00

(54) **CLIP**

(30) Priority: 06.03.2009 JP 2009053278
(71) Applicant: Nifco INC., Yokohama-shi, Kanagawa 244-8522 (JP)
(72) Inventor: NAKAJIMA Takuhiko, Yokohama-shi Kanagawa 244-8522 (JP)
(74) Representative: Gassner, Wolfgang
(86) International application number: PCT/JP2010/053551
(87) International publication number: WO 2010/101216

(57) **Abstract**

The clip of this invention is at least comprised of a flange part and a leg part molded integrally with the flange part hanging down therefrom. The leg part of the clip is inserted in an open hole of a mounting plate so as to clamp and lock the mounting plate together with the flange part of the clip. The leg part is comprised of a pair of elastic locking pieces hanging down from the flange part, a connecting part connecting the other end of the elastic locking pieces and a pair of cantilever locking pieces extending from the connecting part in the direction of the flange part. In the elastic locking pieces, there is molded a locking part which can lock in the lower part of the mounting plate passing through the open hole so as to clamp the lower part which is one side of the mounting plate. The locking part molded in the elastic locking pieces has an elasticity that can make it bypass welding spatters attached around the open hole of the mounting plate and can prevent wobbling with respect to the open hole.

## Description

### FIELD OF THE INVENTION

This invention relates to a clip wherein even when welding spatters are attached around the open hole of a mounting plate, a clip can be mounted by bypassing the welding spatter parts.

### BACKGROUND ART

In case of a conventional clip, for example, in Patent Document 1 (Japan Patent Application Publication 2008-111,451, Official Gazette) as described below, when welding spatters were attached to the hole edge of an open hole, mounting of the clip was difficult due to the welding spatters. Further, a clip described in Patent Document 2 (Japan Patent Application Publication 2008-162,393, Official Gazette) and Patent Document 3 (Japan Patent Application Publication H8-142,730, Official Gazette) below is likewise mounted in an open hole where the welding spatters are not attached thereto.

### PRIOR ART DOCUMENTS

### PATENT DOCUMENTS

Patent document 1: Japanese Patent Application Publication 2008-111,451, Official Gazette
Patent document 2: Japanese Patent Application Publication 2008-162,393, Official Gazette
Patent document 3: Japanese Patent Application Publication H8-142,730, Official Gazette

### SUMMARY OF THE INVENTION

### PROBLEM TO BE SOLVED BY THE INVENTION:

Where welding spatters are attached in the vicinity of the open hole of a mounting plate, a clip in the conventional embodiments is mounted in the open hole once the welding spatters have been removed by means of a graver, shot or blast. Removal work of the welding spatters needs total inspection and removal of even one such welding spatter incurs work time loss, making the cost more expensive. Further, when the welding spatters are small, even though the clip gets into the open hole of a mounting plate, there is a problem that the clip cannot be stably mounted because a part thereof stuck on the welding spatters.

To settle the problem as described as above, this invention is designed to offer a clip wherein even when the welding spatters are attached in the Vicinity of the open hole of a mounting plate, the clip can be stably mounted without wobbling while bypassing the welding spatters.

### MEANS OF SOLVING THE PROBLEMS:

This invention provides a clip whose leg part is movable in the direction of rotation in a state where the leg part is locked in an open hole disposed in a mounting plate, wherein the clip is provided with a flange part which is disposed so as to be placed on the open hole, at least one pair of elastic locking pieces hanging down from the flange part wherein there is disposed a locking part which can lock the lower part of the mounting plate by passing through the open hole, an annular connecting part which integrally connects each tip of the elastic locking pieces together, and the leg part integrally disposed with the annular connecting part and extending in the direction of the flange part which is at least comprised of at least one pair of cantilever locking pieces wherein there is disposed an engaging part in or at about the same position as that of the locking part..

Further, it is desirable for a clip of this invention that an engaging part disposed in the cantilever locking pieces should be provided with a plurality of inclined surfaces moving inwardly from the outer ends thereof.

### EFFECTS OF THE INVENTION:

By the clip of this invention, troubles to be brought about by total inspection of the welding spatters or removal of such welding spatters can be omitted by means of devising the shape or configuration of elastic locking pieces and cantilever locking pieces disposed in the clip. Further, a clip of this invention can be mounted to a mounting plate with high holding power without backlash.

Further, by a clip of this invention, the welding spatters which are attached in a vicinity of the open hole of the mounting plate can be bypassed by means of the shape or configuration of the elastic locking pieces and cantilever locking pieces.

According to the present invention, because the cantilever locking pieces themselves are configured to sway from side to side owing to the inclined surfaces provided in the cantilever locking pieces, the leg part of the clip moves so as to bypass the welding spatters thus enabling the clip to maintain its holding power and to prevent wobbling.

### BRIEF DESCRIPTION OF THE DRAWINGS

FIG. 1 is a front view of a clip pertaining to an embodiment of this invention.
FIG. 2 is a plan view of a clip pertaining to an embodiment of this invention.
FIG. 3 is a bottom view of a clip pertaining to an embodiment of this invention.
FIG. 4 is a right side view of a clip pertaining to an embodiment of this invention.
FIG. 5 is an A-A line cross-sectional view of a clip pertaining to an embodiment of this invention.
FIG. 6 is a B-B line cross-sectional view of a clip pertaining to an embodiment of this invention.
FIG. 7 is a C-C line cross-sectional view of a clip pertaining to an embodiment of this invention.
FIG. 8 is a cross-sectional view showing a state where a clip pertaining to an embodiment of this invention is mounted in the open hole of a mounting plate.
FIG. 9 is a figure showing a place where welding spatters are stuck in the open hole of a mounting plate.
FIG. 10 is a figure showing the relationship between the welding spatters and a clip in a state where the clip pertaining to an embodiment of this invention is mounted in the open hole of a mounting plate.
FIG. 11 is a figure showing the relationship between the welding spatters and a clip in a state where the clip pertaining to an embodiment of this invention is mounted in the open hole of a mounting plate.

### MODES OF CARRYING OUT THE INVENTION

A clip pertaining to an embodiment of this invention is configured so as to be mounted in the right position even when there are welding spatters around the open hole disposed in a mounting plate. More specifically, a clip pertaining to an embodiment of this invention has a flange part and a leg part molded integrally with the flange part hanging down therefrom. The leg part of the clip is inserted in an open hole of a mounting plate so as to clamp and lock the mounting plate together with the flange part of the clip.

The leg part is comprised of a pair of elastic locking pieces hanging down from the flange part, a connecting part connecting the other end of the elastic locking pieces and a pair of cantilever locking pieces extending from the connecting part in the direction of the flange part. In the elastic locking pieces, there is molded a locking part which can lock in the lower part of the mounting plate passing through the open hole so as to clamp the lower part which is one side of the mounting plate. The locking part molded in the elastic locking pieces has an elasticity that can make it bypass the welding spatters and can prevent wobbling with respect to the open hole.

Further, the locking part can be molded in any position depending on the thickness or the number of mounting plates to be clamped. The elastic locking piece is comprised of a pair of elastic locking members with which there is integrally molded an annular connecting part where the hung down tips of the elastic locking pieces connect with each other. Even more particularly, the flange part can be provided with a pair of connecting legs hanging down toward the annular connecting part. Because the connecting legs can add strength with respect to the annular connecting part, the welding spatters can be bypassed easily by molding the elastic locking piece rather thin.

The annular connecting part is integrally disposed with at least one pair of cantilever locking pieces extending in the direction of the flange part, the pair being provided with an engaging part engaging with a mounting plate in about the same position as that of the locking part. The elastic locking pieces and the cantilever locking pieces are molded of synthetic resin having elasticity and by being molded rather thin, are set to achieve a more desirable elasticity. The cantilever locking pieces can assure holding power and prevent potential wobbling with respect to the open hole by the engaging part.

The clip, when inserting the leg part into the open hole of the mounting plate, can bypass the welding spatters and flex the leg part in four directions and can be mounted thereto in a stable state by the elastic locking pieces and cantilever locking pieces even when welding spatters are attached in part around the mounting plate.

Further, as for a clip pertaining to an embodiment of this invention, an engaging part disposed in the cantilever locking pieces is provided with the inclined surfaces which become thinner moving inwardly from the outer ends thereof and the inclined surfaces which become narrower moving in the across-the-width direction. Each of the inclined surfaces of the cantilever locking pieces can be moved easily and can be fitted within the open hole of a mounting plate even when welding spatters are attached therearound. The cantilever locking pieces assure holding power and prevent wobbling. Further, when the welding spatters abut or come into contact with the inclined surfaces, while flexing in the direction of rotation along the inclined surfaces, the cantilever locking pieces can move the position of the clip by bypassing the welding spatters.

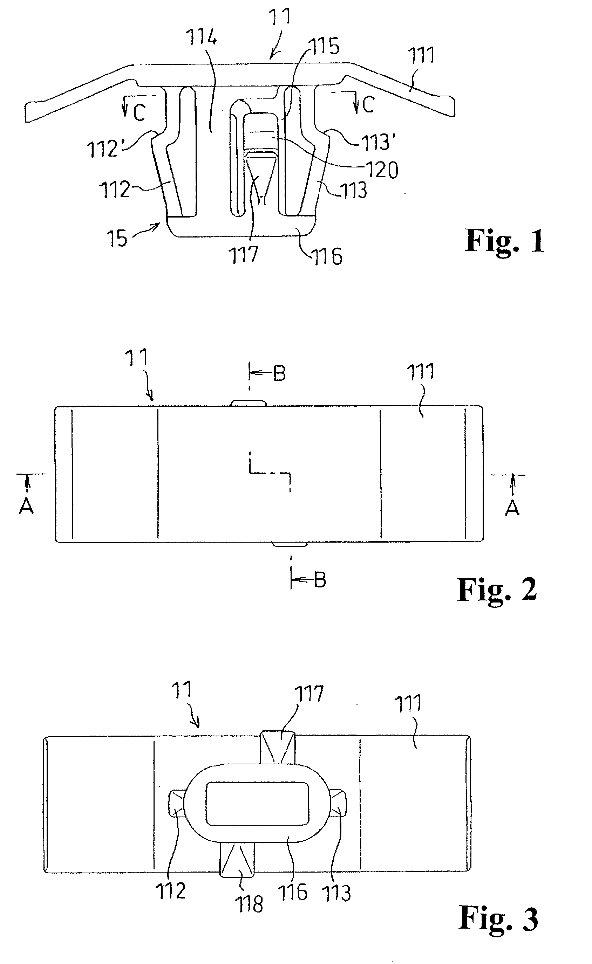

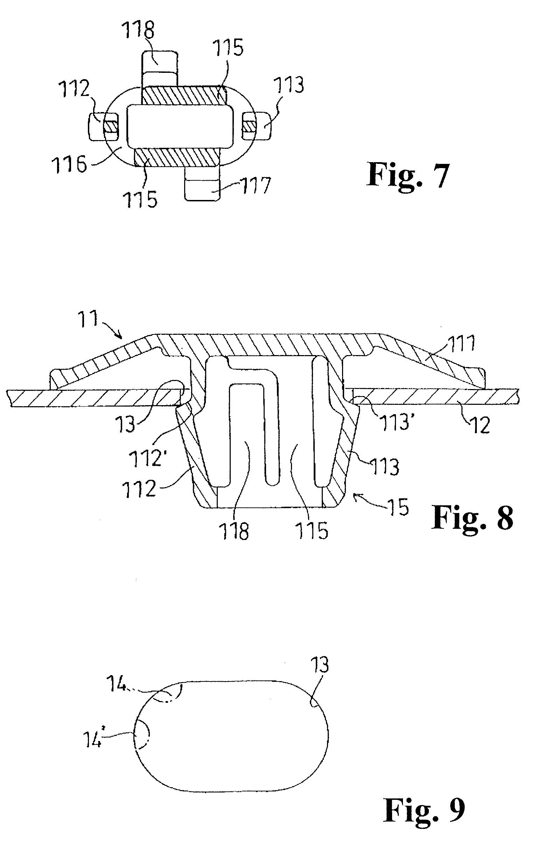

FIG. 1 is a front view of clip 11 which is an example of an embodiment of this invention.
Further, FIG. 2 is a plan view of clip 11, and FIG. 3 is a bottom view of clip 11. Further, FIG. 1 through FIG. 4 are respectively a right side view of clip 11, an A-A line cross-sectional view of FIG. 2, a B-B line cross-sectional view of FIG. 2 and a C-C line cross-sectional view of FIG. 1. In FIG. 1 through FIG. 7, clip 11 has a flange part 111 and a leg part 15 protruding downward from the flange part 111, which is molded integrally with the flange part 111. When the leg part 15 of the clip 11 is inserted within the open hole 13 (cf. FIG. 8) of the mounting plate 12 (cf. FIG. 8), the clip 11 clamps and locks the mounting plate 12 by the flange part 111 and the leg part 15.

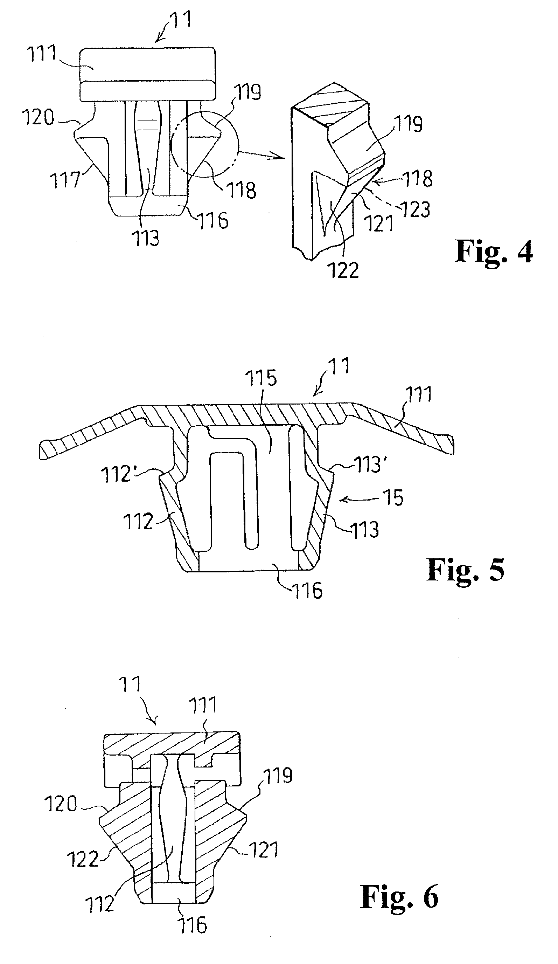

The leg part 15 is comprised of a first elastic locking piece 112 and a second elastic locking piece 113 hanging down from the flange part 111, an annular connecting part 116 connecting the other ends of the lower part of the elastic locking pieces 112 and 113, and a first cantilever locking piece 117 and a second cantilever locking piece 118 extending parallel to the extending direction of the flange part 111 from the annular connecting part 116. As for the first elastic locking piece 112 and second elastic locking piece 113, at least one pair thereof is placed opposed to each other. Further, as for the first cantilever locking piece 117 and second cantilever locking piece 118, at least one pair thereof is placed symmetrical with respect to the central point of the clip 11. (cf. FIG. 4 through FIG. 7). However, the first cantilever locking piece 117 and second cantilever locking piece 118 do not necessarily have to be symmetric about a point.

In the first elastic locking piece 112 and second elastic locking piece 113, there are molded a first locking part 112' and a second locking part 113' which can lock in the lower part of the mounting plate 12 passing through the open hole 13 so as to clamp the lower part that is one side of the mounting plate 12. The first locking part 112' and the second locking part 113' molded in the first elastic locking piece 112 and second elastic locking piece 113 have an elasticity that can make them bypass the welding spatters 14 and 14' (cf. FIG. 9) and can prevent wobbling with respect to the open hole 13.

Further, the first locking part 112 and second locking part 113 are molded in an appropriate position depending on the thickness or the number of mounting plates to be clamped. The first elastic locking piece 112 and second elastic locking piece 113 are made of a material having elasticity and each of the tips of the first elastic locking piece 112 and second elastic locking piece 113 which are hung down are connected with each other through annular connecting part 116. It is to be noted that in the present example, a first elastic locking piece 112 and a second elastic locking piece 113 are disposed integrally with annular connecting part 116. Even more particularly, in this example, there is disposed a pair of connecting legs 114 and 115 which, extending downward from the flange part 111, is connected integrally with the annular connecting part 116. Thus, because strength of the leg part 15 can be added by providing the connecting legs 114 and 115 and the annular connecting part 116, a clip according to the present example can be configured so as to be able to easily bypass welding spatters by making the first elastic locking piece 112 and second elastic locking piece 113 rather thin.

The annular connecting part 116 is disposed with at least one pair of a first cantilever locking piece 117 and a second cantilever locking piece 118 extending in the direction of the flange part 111, the pair being provided with the engaging parts 119 and 120 which engage with the mounting plate 12 in about the same position as that of a first elastic locking piece 112 and a second elastic locking piece 113. The first elastic locking piece 112, second elastic locking piece 113, first cantilever locking piece 117 and second cantilever locking piece 118, for example, are formed of synthetic resin having elasticity.
It is to be noted that, in the present example, the first elastic locking piece 112, second elastic locking piece 113, first cantilever locking piece 117 and second cantilever locking piece 118 are formed thin so that they may have the required elasticity. The first cantilever locking piece 117 and second cantilever locking piece 118 can assure holding power to hold the mounting plate 12 and can prevent wobbling with respect to the open hole 13 by the engaging parts 119 and 120.

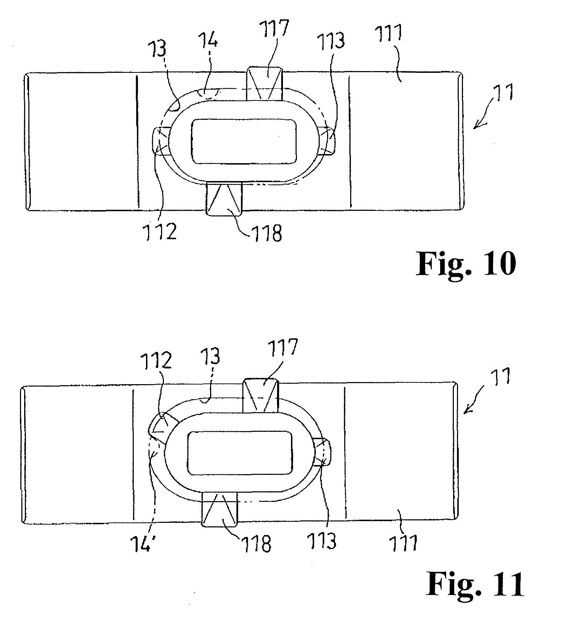

FIG. 8, FIG. 9, FIG. 10 and FIG. 11 are figures showing a state where the clip is mounted in the open hole of a mounting plate in an embodiment of this invention. FIG. 8 is a cross-sectional view. FIG. 9 shows an area around the open hole where the welding spatters are attached. FIG. 10 and FIG. 11 are figures showing the relationship between the welding spatters and the clip. As shown in FIG. 8, FIG. 9, FIG. 10 and FIG. 11, when the leg part 15 of the clip 11 is inserted into the open hole 13 of the mounting plate 12, the mounting plate 12 comes to be held by the flange part 111 and first elastic locking piece 112, second elastic locking piece 113, first cantilever locking piece 117 and second cantilever locking piece 118. And the mounting plate 12, in one side thereof, abuts with an edge of the flange part 111 and, in the side opposite to the one side thereof, is held by at least four 4 points including the first locking part 112, second locking part 113, first engaging part 119 and second engaging part 120.

Even when the welding spatters 14 (FIG. 10) and 14' (FIG. 11) are attached in part around the mounting plate 12, the clip 11, when inserting the leg part 15 into the open hole 13 of the mounting plate 12, can make the leg part 15 flex partially to allow it bypass the welding spatters 14 and 14' and can thus be mounted thereto in a stable state by the first elastic locking piece 112, second elastic locking piece 113, first cantilever locking piece 117 and second cantilever locking piece 118.

For example, in FIG. 10, the cantilever locking piece 117 comes to have a weak fitting force due to the welding spatters 14, but, on the other hand, the cantilever locking piece 118 of the other side comes to have a stronger fitting force because it is pushed to the side of open hole 13. In FIG. 11, the elastic locking piece 112 is mounted in a flexed state owing to the welding spatters 14'. Even though not shown in FIG. 8, FIG. 9, FIGS. 10 and 11, because the elastic locking pieces 112 and 113 and cantilever locking pieces 117 and 118 flex partially owing to or depending upon the position of the welding spatters, and thus because when the fitting force in one side becomes weaker, the fitting force in the other side become stronger, a stable fitted state of clip 11 with respect to mounting plate 12 can be maintained.

As shown enlarged in FIG. 4, the engaging parts 119 and 120 of the first cantilever locking piece 117 and second cantilever locking piece 118 can be provided with a first inclined surface 121 and a second inclined surface 122 (123) which slope inward. Even when the welding spatters 14 are attached thereto, the inclined surfaces 121, 122 and 123 of the cantilever locking pieces 117 and 118 can each flex from the base easily and can be fitted within the open hole 13 of the mounting plate 12.
The cantilever locking pieces 117 and 118 assure holding power and thus prevent wobbling. Further, when the welding spatters 14 abut or come into contact with the inclined surfaces 121, 122 and 123, while swaying rotating along the inclined surfaces 121, 122 and 123, the cantilever locking pieces 117 and 118 move the position of the clip 11.

Although an embodiment of the present invention is explained in detail above, the present invention is not limited to this embodiment and can be modified in a variety of ways without departing from the subject matter coming within the scope of the claims. It goes without saying that the configuration of all parts of the clip of this invention can be changed within the scope described in the claims.

This application is based on a Japanese patent application (Patent Application No. 2009-053278) filed on March 6, 2009, and its substance is herein incorporated as a reference.

### EXPLANATIONS OF THE LETTERS OF NUMERALS:

- 11: clip
- 111: flange part
- 112: first elastic locking piece
- 112': first locking part
- 113: second elastic locking piece
- 113': second locking part
- 114: first connecting leg
- 115: second connecting leg
- 116: annular connecting part
- 117: first cantilever locking piece
- 118: second cantilever locking piece
- 119: first engaging part
- 120: second engaging part
- 121: first inclined surface.
- 122: second inclined surface
- 123: third inclined surface
- 12: mounting plate
- 13: open hole
- 14: welding spatter(s)
- 15,: leg part

## Claims

1. A clip in which a leg part is movable in a direction of rotation in a state where the leg part is locked in an open hole disposed on a mounting plate, comprising:
a flange part disposed above the open hole,
at least a pair of elastic locking pieces hanging from the flange part and having a locking part capable of locking a lower part of the mounting plate passing through the open hole,
an annular connecting part integrally connecting each tip of the elastic locking pieces, and
the leg part integrally disposed with the annular connecting part, and including at least a pair of cantilever locking pieces having an engaging part at about a same position as that of the locking part and extending in a direction of the flange part.

2. The clip according to claim 1, wherein the engaging part disposed in the cantilever locking pieces has a plurality of inclined surfaces moving inwardly from the outer ends thereof.
